# EUROPÄISCHE PATENTSCHRIFT

(11) **EP 4 223 721 B1**
(45) Veröffentlichungstag und Bekanntmachung des Hinweises auf die Patenterteilung: **05.06.2024**
(21) Anmeldenummer: 23155420.5
(22) Anmeldetag: 07.02.2023
(51) Int. Cl.: C04B 28/04, C04B 28/14

(54) **BETONMISCHUNG SOWIE VERFAHREN ZU DEREN HERSTELLUNG, VERWENDUNG DER BETONMISCHUNG UND VERFAHREN ZUR HERSTELLUNG EINES BETONBAUTEILS UND BETONBAUTEIL**
CONCRETE MIXTURE AND METHOD FOR THE PRODUCTION THEREOF, USE OF THE CONCRETE MIXTURE AND METHOD FOR PRODUCING A CONCRETE COMPONENT AND CONCRETE COMPONENT
MÉLANGE DE BÉTON ET SON PROCÉDÉ DE FABRICATION, UTILISATION DU MÉLANGE DE BÉTON ET PROCÉDÉ DE FABRICATION D'UN ÉLÉMENT EN BÉTON ET ÉLÉMENT EN BÉTON

(30) Priorität: 08.02.2022 DE 102022102938
(43) Veröffentlichungstag der Anmeldung: 09.08.2023
(73) Patentinhaber: Dyckerhoff GmbH, 65203 Wiesbaden (DE)
(72) Erfinder: Deuse, Thomas, 65203 Wiesbaden (DE); Parker, Frank, 65203 Wiesbaden (DE); Rüßmann, Frank, 65203 Wiesbaden (DE)
(74) Vertreter: Dr. Solf & Zapf Patent- und Rechtsanwalts PartG mbB

(56) Entgegenhaltungen:
- WO-A1-2019/157593
- CN-A- 101 801 876
- CN-A- 110 655 369
- CN-A- 111 689 791
- US-A1- 2020 102 248
- CHU HONGYAN ET AL: "Mechanical Properties and Environmental Evaluation of Ultra-High-Performance Concrete with Aeolian Sand", MATERIALS, M D P I AG, CH , Bd. 13, Nr. 14 1. Januar 2020 (2020-01-01), Seiten 3148-1, XP009545093, ISSN: 1996-1944, DOI: 10.3390/MA13143148 Gefunden im Internet: URL:https://www.ncbi.nlm.nih.gov/pmc/ivip/ 1996-1944/13/14/3148 [gefunden am 2020-07-15]
- NÉCIRA BRAHIM ET AL: "Study of the combined effect of different types of sand on the characteristics of high performance self-compacting concrete", JOURNAL OF ADHESION SCIENCE AND TECHNOLOGY, TAYLOR & FRANCIS, GB , Bd. 31, Nr. 17 1. Januar 2017 (2017-01-01), Seiten 1-17, XP009545120, ISSN: 0169-4243, DOI: 10.1080/01694243.2017.1289829 Gefunden im Internet: URL:https://www.tandfonline.com/doi/abs/10 .1080/01694243.2017.1289829 [gefunden am 2017-02-08]
- HÖFFGEN JAN ET AL: "Gesteinskörnungen: Zukünftige Rohstoffversorgung. Aktuelle Situation, Ausblick in die Zukunft, stoffliche Alternativen", BETON, VERLAG BAU UND TECHNIK GMBH, DE, Bd. 71, Nr. 4, 1. Januar 2021 (2021-01-01) , Seiten 112-119, XP009545092, ISSN: 0005-9846
- ELIPE M G M ET AL: "Aeolian sands: Characterization, options of improvement and possible employment in construction - the State of the Art", CONSTRUCTION AND BUILDING MATERIALS, ELSEVIER, NETHERLANDS , Bd. 73 1. Januar 2014 (2014-01-01), Seiten 728-739, XP009545129, ISSN: 0950-0618, DOI: 10.1016/J.CONBUILDMAT.2014.10.008 Gefunden im Internet: URL:https://www.sciencedirect.com/science/ article/pii/S0950061814011489

## Beschreibung

Die vorliegende Erfindung betrifft eine Betonmischung zur Herstellung von Betonbauteilen, vorzugsweise aus ultrahochfestem Beton (UHFB), sowie ein Verfahren zu deren Herstellung, die Verwendung der Betonmischung zur Herstellung von Betonbauteilen, vorzugsweise aus ultrahochfestem Beton (UHFB), sowie ein Verfahren zur Herstellung eines Betonbauteils, vorzugsweise aus ultrahochfestem Beton (UHFB) und ein derartiges Betonbauteil.

Bei Beton unterscheidet man zwischen Ortbeton und vorgefertigtem Beton bzw. Betonfertigteilen. Vorgefertigter Beton wird an einem Ort, insbesondere einem Fertigteilwerk, ausgehärtet und sobald er einsatzbereit ist, zur Baustelle transportiert. Ortbetonmischungen bzw. Ortbetonfrischmassen dagegen erhärten an dem Ort, an dem sie verbaut und genutzt werden. Ortbetonfrischmassen werden als Transportbetonfrischmassen bzw. Transportbetonmischungen mit Mischfahrzeugen auf die Baustelle gebracht oder an Ort und Stelle in einer, insbesondere mobilen, Baustellenanlage als Baustellenbetonfrischmasse gemischt. Die Transportbetonmischungen werden in der Regel in einem Transportbetonwerk angemischt.

Festbeton ist ein hydraulisch erhärtetes Gemisch, welches hergestellt wird aus einer frischen Betonmischung bzw. Betonfrischmasse bzw. einem Frischbeton aus hydraulischem Bindemittel, mindestens einer Gesteinskörnung und Anmachwasser. Zudem enthält die Betonfrischmasse in der Regel Betonzusatzstoffe und/oder Betonzusatzmittel. Beton ist unter anderem in der DIN EN 206-1:2013+A2:2021/DIN 1045-2:2008-08 genormt.

Zusatzstoffe sind fein verteilte Stoffe, die bestimmte Eigenschaften des Betons beeinflussen. Sie beeinflussen vorrangig die Verarbeitbarkeit des Frischbetons und die Festigkeit und Dichtigkeit des Festbetons. Im Gegensatz zu Zusatzmitteln ist die Zugabemenge im Allgemeinen so groß, dass sie bei der Stoffraumrechnung zu berücksichtigen ist. Zusatzstoffe dürfen das Erhärten des Zementes sowie die Festigkeit und Dauerhaftigkeit des Betons nicht beeinträchtigen. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen, und organischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zusatzstoffe müssen den Anforderungen der DIN EN 206-1:2013+A2:2021/DIN 1045-2:2008-08 und den in den vorgenannten Normen aufgeführten Normen entsprechen. Zusatzstoffe gehören zum Mehlkornanteil des Betons. Als Mehlkorn bzw. Mehl werden im Rahmen der Erfindung alle Körnungen bezeichnet, deren Korngröße ≤ 0,125 mm beträgt.

Gesteinskörnungen bzw. Zuschlagstoffe sind ebenfalls inert und deutlich gröber als Zusatzstoffe. Sie bestehen somit nicht ausschließlich aus Mehlkorn, können aber einen Mehlkornanteil aufweisen. Gesteinskörnungen für Beton sind in der DIN EN 12620:2002+A1:2008 genormt.

Zusatzmittel werden zugesetzt, um durch chemische oder physikalische Wirkung oder durch beides die Eigenschaften des Frisch- oder Festbetons - wie z.B. Verarbeitbarkeit, Erstarren, Erhärten oder Frostwiderstand - zu beeinflussen. Zusatzmittel werden in so geringen Mengen zugegeben (< 5 M.-% des Zementanteils), dass sie als Raumanteil des Betons ohne Bedeutung sind. Zusatzmittel werden flüssig, pulverförmig oder als Granulat geliefert. Zusatzmittel für Beton müssen den Anforderungen der DIN EN 206-1:2013+A2:2021/DIN 1045-2:2008-08 und den in den vorgenannten Normen aufgeführten Normen entsprechen.

Festbeton wird unter anderem anhand seiner Festigkeitseigenschaften klassifiziert. Gemäß der DIN EN 206-1:2013+A2:2021 wird Festbeton mit einer Zylinderdruckfestigkeit gemäß DIN EN 12390-3:2021-09 ≥ 55 N/mm² (C55/67) bis einschließlich 100 N/mm² (C 100/115) als hochfester Beton bezeichnet. Die hohe Zylinderdruckfestigkeit wird zum einen durch einen geringen w/z-Wert (Wasserzementwert) des Frischbetons erreicht, der insbesondere bei 0,20 - 0,35 liegt. Um die Verarbeitbarkeit zu gewährleisten, werden dem Frischbeton zudem Hochleistungs-Fließmittel zugegeben. Des Weiteren enthält hochfester Beton in der Regel feinteilige Puzzolane. Die sehr feinen Partikel der Puzzolane füllen zum einen den Porenraum zwischen den Zementkörnern aus und führen so zu einer physikalischen Packungsdichteoptimierung und dadurch zu einem dichteren Gefüge. Zum anderen findet eine chemische Packungsdichteoptimierung durch eine puzzolanische Reaktion zwischen dem bei der Zementhydratation entstehenden Ca(OH)₂ und den Puzzolanen statt, wobei zusätzliche CSH (Calciumsilikathydrat)-Phasen gebildet werden. Dies führt zu einer zusätzlichen Festigkeitssteigerung, da die CSH-Phasen eine höhere Festigkeit als das Ca(OH)₂ aufweisen. Insbesondere wird dadurch die Mikrostruktur in der Kontaktzone zwischen Zementstein und Zuschlag verbessert.

Ultrahochfester Beton (UHFB) oder auch "Ultra High Performance Concrete (UHPC)" ist Festbeton mit besonders hoher Dichte und Festigkeit. Die übliche aber nicht durch eine Norm definierte Grenze für die Unterscheidung zu Normalbeton ist eine Zylinderdruckfestigkeit oberhalb der in DIN EN 206-1:2013+A2:2021 definierten Festigkeitsklasse C 100/115 sowie ein w/z-Wert < 0,25. Diese hohen Druckfestigkeiten werden u.a. durch einen sehr geringen w/z-Wert des Frischbetons erzielt, der beispielsweise bei w/z = 0,2 liegt. Zudem wird bei ultrahochfestem Beton eine sehr hohe Packungsdichte angestrebt. Um das Gefüge weiter zu verdichten, wird ultrahochfester Beton in der Regel einer Wärmebehandlung unterzogen. Dadurch sind Zylinderdruckfestigkeiten im Bereich von 200 N/mm² und Biegezugfestigkeiten von mehr als 20 N/mm² möglich.

Für ein duktiles Verhalten wird der ultrahochfeste Beton alternativ oder in Kombination mit konventioneller Bewehrung durch Fasern verstärkt. Üblich sind Mikrostahlfasern, es können aber auch andere Abmessungen und Materialien wie Carbon, Glas und Kunststoff zum Einsatz kommen.

Zudem wird auf dem Fachgebiet häufig der Begriff "Hochleistungsbeton" verwendet. Hochleistungsbeton verdeutlicht, dass für viele Anwendungen die Dauerhaftigkeit des Betons ebenso interessant, wenn nicht von noch größerem Interesse als seine Druckfestigkeit ist. Da der Widerstand von Beton gegen äußere chemische oder mechanische Beanspruchungen wesentlich durch ein besonders dichtes und festes Gefüge bestimmt wird, unterscheiden sich hochfester Beton und Hochleistungsbeton aus betontechnologischer Sicht im Regelfall nicht.

Des Weiteren ist auch noch eine gute Biegezugfestigkeit des Hochleistungsbetons von Bedeutung. Denn die in der Regel schlanken Bauteile aus Hochleistungsbeton werden tendenziell mehr auf Dehnung und Zug beansprucht als auf Druck.

Bekanntermaßen wird hauptsächlich Sand, insbesondere Quarzsand, als Zuschlagstoff für Beton verwendet.

Bei Sand handelt es sich um ein natürlich vorkommendes, unverfestigtes Sediment, das sich überwiegend aus Mineralkörnern mit einer Korngröße von 0,063 bis 2 mm zusammensetzt. Sand und Kies wird bekanntermaßen entweder durch Trocken- oder Nassabbau abgebaut. Anschließend werden durch Grobabsiebung zunächst die Steine > 32 mm aussortiert. Danach wird das Material gewaschen, um es von Ton und Lehm und anderen unerwünschten Bestandteilen zu befreien. Das gewaschene Material wird anschließend in einer Siebanlage in unterschiedliche Kornfraktionen getrennt. In der Regel werden Körner mit einem Durchmesser ≤ 2 mm als Sand, das Material mit einem Durchmesser > 2 mm als Kies bezeichnet. Der so gewonnene Sand mit einer Korngröße bis 2 mm wird nun mit Wasser abgeschlemmt. Den abgeschlemmten, nassen Sandanteil bezeichnet man als "Schlemmsand" oder "Schwemmsand" oder "Schlämmsand". Dieser wird üblicherweise noch auf eine Korngröße ≤ 1 mm abgesiebt. Schlemmsand ist immer nass bzw. feucht und enthält in der Regel einen Wasseranteil von 6 bis 12 M.-%. Beim noch weiteren Wasch- und Siebprozess entsteht letztendlich Waschschlamm. Dieser enthält Wasser und Mineralstoffe mit einem hohen Anteil der Korngröße 0,25 mm. In der Regel beträgt der d₉₀ Wert ≤ 350 µm.

Quarzsande und Quarzkiese unterscheiden sich von anderen Sanden und Kiesen vor allem durch ihren hohen SiO₂-Anteil.

Der weltweite Bedarf an Bausand ist sehr hoch und der weltweite Bauboom hat eine Sandknappheit ausgelöst. Dies hat negative Folgen für die Umwelt. In Deutschland stammen Sande und Kiese in der Regel aus den Ablagerungen, die Flüsse und Gletscher im Lauf von Hunderttausenden und mehr Jahren hinterlassen haben. Aufgrund des unregulierten Abbaus von Sand werden nun beispielsweise Flüsse, Deltas und Küsten ausgewaschen.

Aus diesem Grund ist man bestrebt, auf alternative und bislang ungenutzte Ressourcen zurück zu greifen.

Der Artikel "Gesteinskörnungen: Zukünftige Rohstoffversorgung", Jan Höffgen, Michael Vogel, Oliver Blask, Petra Schlager und Frank Dehn, Zeitschrift beton 4/2021 befasst sich mit der Verwendung von bisher wenig benutzten Brechsanden und Wüstensanden für die Herstellung von Beton sowie Waschschlämmen für die grobkeramische Industrie. Es wird festgestellt, dass sich Wüstensande für einen Ersatz von Flusssanden allein auf Grund ihrer Korngrößenverteilung nicht eignen. Die enge Kornabstufung führt außerdem zu einer mangelnden Packungsdichte und Wüstensande bieten eine nicht ausreichende Korn-zu-Korn-Abstützung aufgrund der glatten Oberflächen der runden Kornform. Infolgedessen kann Wüstensand deshalb nur einen geringen Teil der üblichen Gesteinskörnung im Beton ersetzen und es kommt nur als Füller zur Erhöhung der Packungsdichte im Feinkornbereich in Frage.

Auch in der Pressemitteilung "BGR untersucht Sand aus der Sahara und von der arabischen Halbinsel: Zu fein - Wüstensand kein hochwertiger Baurohstoff" kommt man zu dem Schluss, dass Wüstensand zu fein ist, um zur Herstellung von Beton verwendet zu werden, da er keinerlei Grobsandanteile aufweist und auch der Mittelsandanteil fehlt.

Der Artikel "Mechanical Properties and Environmental Evaluation of Ultra-High-Performance Concrete with Aeolian Sand, Materials 2020, 13, 3148, Hongyan et al., befasst sich mit der Verwendung von Wüstensand für die Herstellung von UHPC. Die zur Herstellung verwendete Betonmischung weist als Bindemittelkomponente Zement, Flugasche, Silicastaub und Calciumoxid in Verbindung mit äolischem Sand als alleiniger Gesteinskörnung auf. Der Anteil an Silicastaub in der Bindemittelkomponente beträgt 10 M.-%. Anhand der in dem Artikel enthaltenen Sieblinie wurde von der Anmelderin ermittelt, dass der d`-Wert des Wüstensandes bei ca. 475 µm liegt.

Die DE 10 2017 102 225 B3 befasst sich mit der Verwendung von Wüstensand als Zuschlagstoff von Beton. Dazu wird der Wüstensand zuvor in einer Hochdruckwalzenpresse gebrochen.

Und die DE 10 2017 006 720 B3 offenbart ein Baustoffgranulat, bei dem ein Anteil einer gebrochenen Körnung von Feindsand, insbesondere Wüstensand, in einer hydraulisch abgebundenen Bindemittelmatrix eingebunden ist.

Aufgabe der vorliegenden Erfindung ist die Bereitstellung einer Betonmischung für die Herstellung von kostengünstigen, ressourcenschonenden Hochleistungs-Betonbauteilen, vorzugsweise Hochleistungs-Transportbetonbauteilen oder Hochleistungs-Baustellenbetonbauteilen oder Hochleistungs-Betonfertigteilen, mit guter Biegezugfestigkeit, die Bereitstellung eines derartigen Betonbauteils sowie eines Verfahrens zur Herstellung der Betonmischung.

Weitere Aufgabe ist die Verwendung der Betonmischung für die Herstellung von kostengünstigen, ressourcenschonenden Hochleistungs-Betonbauteilen, vorzugsweise Hochleistungs-Transportbetonbauteilen oder Hochleistungs-Baustellenbetonbauteilen oder Hochleistungs-Betonfertigteilen, mit guter Biegezugfestigkeit und die Bereitstellung eines Verfahrens zur kostengünstigen, ressourcenschonenden Herstellung eines Hochleistungs-Betonbauteilen, vorzugsweise eines Hochleistungs-Transportbetonbauteils oder Hochleistungs-Baustellenbetonbauteils oder Hochleistungs-Betonfertigteils, mit guter Biegezugfestigkeit.

Diese Aufgaben werden durch eine Betonmischung mit den Merkmalen von Anspruch 1, sowie Verwendungen mit den Merkmalen von Anspruch 11 und 14, ein Betonbauteil mit den Merkmalen von Anspruch 13 und Verfahren mit den Merkmalen von Anspruch 12 und 15 gelöst.

Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:

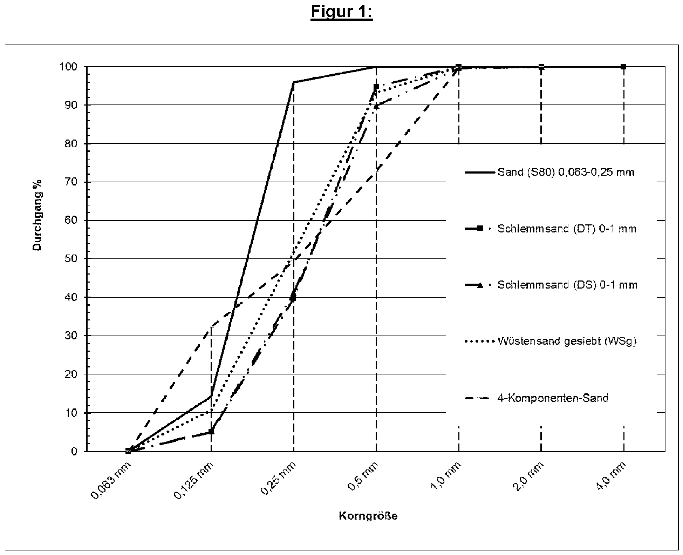

- Figur 1:: Die Korngrößenverteilung von verschiedenen erfindungsgemäß verwendeten Feinstsanden
- Figur 2:: Die Ergebnisse der 4-Punkt Biegezugfestigkeits- und Würfel-Druckfestigkeitsprüfungen

Im Rahmen der Erfindung wurde nun überraschenderweise herausgefunden, dass es für die Herstellung von Hochleistungs-Betonbauteilen nicht wie bei Normalbeton auf die Kornform und die Kornabstufung ankommt, sondern die Verwendung von Feinstsanden, die eigentlich als ungeeignet eingestuft werden, für die Herstellung von Hochleistungs-Betonbauteilen in Kombination mit einer speziellen Bindemittelkomponente zu guten Druckfestigkeiten und vor allem aber auch zu hervorragenden Biegezugfestigkeiten führt, insbesondere ohne dass die Feinstsande zuvor mechanisch zerkleinert und/oder granuliert oder anderweitig kompaktiert werden.

Der Feinstsand weist dabei eine maximale Korngröße ≤ 2000 µm und einen d₉₅ Wert von 500 bis 800 µm, bevorzugt von 620 bis 750 µm, bestimmt mittels Laserlichtbeugung gemäß ISO 13320:2020-01 auf. Der d₉₅ Wert besagt bekanntermaßen, dass 95 M.-% der Körner ≤ des angegebenen Wertes sind.

Der d₉₀ Wert des Feinstsandes beträgt vorzugsweise 450 bis 650 µm, bevorzugt 500 bis 600 µm, bestimmt mittels Laserlichtbeugung gemäß ISO 13320:2020-01.

Und der d₅₀ Wert des Feinstsandes beträgt vorzugsweise 200 bis 400 µm, bevorzugt 250 bis 350 µm, bestimmt mittels Laserlichtbeugung gemäß ISO 13320:2020-01.

Zudem wurde erfindungsgemäß herausgefunden, dass der Äquivalentdurchmesser d' des Feinstsandes eine Rolle spielt. Dies liegt bei dem erfindungsgemäßen Feinstsand bei 300 bis 470 µm, bevorzugt bei 300 bis 390 µm, besonders bevorzugt bei 310 bis 370 µm, bestimmt mittels Laserlichtbeugung gemäß ISO 13320:2020-01 und DIN 66145:1976-04.

Des Weiteren weist der Feinstsand vorzugsweise ein Steigungsmaß n gemäß DIN 66145:1976-04 von 1,5 bis 3,3, bevorzugt 1,9 bis 2,5, besonders bevorzugt 1,9 bis 2,3, auf. Die zur Bestimmung des Steigungsmaßes erforderlichen Korngrößen werden ebenfalls selbstverständlich mittels Laserlichtbeugung gemäß ISO 13320:2020-01 bestimmt.

Der Äquivalentdurchmesser d` und das Steigungsmaß n kennzeichnen die RRSB-Gerade, die aus der RRSB-Verteilungsfunktion durch mehrere mathematische Operationen entsteht und zur Darstellung von Korn- und Teilchengrö-ßenverteilungen im RRSB-Netz nach DIN 66141:1974-02 dient. Diese Parameter werden u.a. zur Produktionssteuerung in Zementwerken genutzt.

Je kleiner dabei das Steigungsmaß n ist, desto stetiger ist die Kornverteilung. Im Rahmen der Erfindung wurde nun herausgefunden, dass auch Feinstsande mit dem angegebenen Steigungsmaß und dem angegebenen Äquivalentdurchmesser d' zu hervorragenden Biegezugfestigkeiten führen, obwohl sie eigentlich aufgrund ihrer Kornverteilung als schwer verdichtbar angesehen werden.

Die zur Herstellung verwendete erfindungsgemäße Betonmischung weist somit folgende Bestandteile auf:
a) eine Bindemittelkomponente, die Portlandzementklinker, Hüttensand und zumindest einen Erstarrungsregler in Form einer Calciumsulfatkomponente aufweist,
b) zumindest ein Fließmittel,
c) Vorzugsweise Fasern, bevorzugt Stahlfasern,
d) eine Gesteinskörnungskomponente aufweisend eine Sandkomponente,
   und
e) Anmachwasser,

wobei die Sandkomponente zumindest einen Feinstsand mit einem d₉₅ Wert von 500 bis 800 µm, bevorzugt 620 bis 750 µm, gemäß ISO 13320:2020-01 und einem Äquivalentdurchmesser d' von 300 bis 470 µm, bevorzugt 300 bis 390 µm, besonders bevorzugt 310 bis 370 µm, gemäß ISO 13320:2020-01 und DIN 66145:1976-04, aufweist,
und die Bindemittelkomponente zu mindestens 95 M.-%, besonders bevorzugt zu 100 M.-%, aus Hüttensand, Portlandzementklinker und Erstarrungsregler besteht.

Bei dem erfindungsgemäßen Feinstsand handelt es sich zudem vorzugsweise um Schlemmsand. Zudem kann es sich auch um Wüstensand handeln.

Der Feinstsand wird zudem nicht feuergetrocknet, sondern naturfeucht oder luftgetrocknet verwendet. Er weist also immer einen gewissen Feuchtegehalt auf, im Fall des Schlemmsandes vorzugsweise 6 bis 12 M.-%.

Vorteil des Schlemmsandes ist damit, dass er für die Verwendung für die Betonmischung nicht feuergetrocknet oder anderweitig aufbereitet werden muss. Zudem entfallen bei der Verwendung für die Herstellung von Transportbetonbauteilen lange Transportwege, da Kiesgruben oftmals in geringer Entfernung von Transportbetonwerken angesiedelt sind.

Des Weiteren handelt es sich bei dem Feinstsand vorzugweise um Quarzsand. Quarzsand weist insbesondere einen SiO₂-Gehalt von > 75 M.-%, bevorzugt > 90 M.-%, besonders bevorzugt > 98 M.-%, bestimmt mittels Röntgendiffraktometrie gemäß DIN EN 13925-1 :2003-7, DIN EN 13925-2:2003-7 und DIN EN 13925-3:2005-7 ohne inneren Standard und mit Rietveld-Auswertung, auf.

Der Trockenanteil an Bindemittelkomponente in der Betonmischung beträgt zudem vorzugsweise 25 bis 50 M.-%, bevorzugt 30 bis 40 M.-%, bezogen auf die Gesamtmasse der Betonmischung.

Der Trockenanteil an Bindemittelkomponente in der Betonmischung beträgt zudem vorzugsweise 25 bis 50 M.-%, bevorzugt 28 bis 50 M.-%, besonders bevorzugt besonders 30 bis 50 M.-% oder vorzugsweise 25 bis 40 M.-%, bevorzugt 28 bis 40 M.-%, besonders bevorzugt besonders 30 bis 40 M.-%, bezogen auf die Gesamtmasse der Betonmischung.

Die Gesamtmasse der Betonmischung beinhaltet bekanntermaßen auch den Wassergehalt. Der Trockenanteil beinhaltet nur die Trockenmasse der jeweiligen Komponente.

Und der Trockenanteil an Sandkomponente in der Betonmischung beträgt vorzugsweise 5 bis 60 M.-%, bevorzugt 15 bis 60 M.-%, besonders bevorzugt 35 bis 55 M.-%, bezogen auf die Gesamtmasse der Betonmischung.

Vorzugsweise besteht die Sandkomponente der Betonmischung bezogen auf ihre Trockenmasse dabei zu 20 bis 100 M.-%, bevorzugt zu 40 bis 100 M.-%, besonders bevorzugt zu 50 bis 100 M.-%, aus dem erfindungsgemäßen, nicht abgestuften Feinstsand.

Die Sandkomponente kann auch zumindest einen weiteren Sand aufweisen.

Bei dem zumindest einen weiteren Sand der Sandkomponente der Betonmischung kann es sich zum Beispiel um aufbereiteten und feuergetrockneten

Sand handeln, der sich im Hinblick auf den d₉₅ Wert und/oder den Äquivalentdurchmesser d' und insbesondere auch im Hinblick auf das Steigungsmaß n von dem Feinstsand unterscheidet, also nicht im erfindungsgemäßen Bereich liegt.

Der weitere Sand kann dabei gröber oder feiner sein als der Feinstsand. Vorzugsweise weist der weitere Sand aber einen geringeren d₉₅ Wert und/oder einen geringeren Äquivalentdurchmesser d' auf als der erfindungsgemäße Feinstsand.

Insbesondere handelt es sich bei dem weiteren Sand ebenfalls vorzugsweise um Quarzsand.

Zudem weist der zumindest eine weitere Sand vorzugsweise einen d₉₅ Wert von 200 bis 400 µm, bevorzugt von 250 bis 350 µm, ISO 13320:2020-01 auf.

Der d₉₀ Wert des zumindest einen weiteren Sandes beträgt vorzugsweise 180 bis 350 µm, bevorzugt 220 bis 320 µm ISO 13320:2020-01.

Und der d₅₀ Wert des zumindest einen weiteren Sandes beträgt vorzugsweise 100 bis 300 µm, bevorzugt 150 bis 250 µm ISO 13320:2020-01.

Der Äquivalentdurchmesser d' des zumindest einen weiteren Sandes beträgt vorzugsweise 100 bis 280 µm, bevorzugt 170 bis 250 µm, gemäß ISO 13320:2020-01 und DIN 66145:1976-04.

Des Weiteren weist der zumindest eine weitere Sand vorzugsweise einen n-Wert von 3,3 bis 3,9 bevorzugt 3,4 bis 3,6, auf, gemäß DIN 66145:1976-04.

Die Kornverteilung des weiteren Sandes ist also deutlich unstetiger.

Zudem besteht vorzugsweise die Gesteinskörnungskomponente der Betonmischung zu 80 bis 100 M.-%, bevorzugt zu 90 bis 100 M.-%, bezogen auf die Trockenmasse der Gesteinskörnungskomponente, aus der Sandkomponente. Die Gesteinskörnungskomponente kann also zumindest eine weitere Gesteinskörnung aufweisen, bei der es sich nicht um Sand handelt.

Beispielsweise kann es sich um mineralische Prozessmehle und/oder Schleif-, Polier und Sandstrahlmittel, z.B. aus der Natursteinindustrie, handeln.

Die Gesteinskörnungskomponente kann auch zumindest eine weitere Gesteinskörnung aufweisen, deren Korngröße > 2 mm ist.

Und der Trockenanteil an Fasern, vorzugsweise Stahlfasern, in der Betonmischung beträgt vorzugsweise 2 bis 12 M.-%, bevorzugt 6 bis 10 M.-%, bezogen auf die Gesamtmasse der Betonmischung.

Vorzugsweise weisen die Fasern, vorzugsweise die Stahlfasern, eine Faserlänge von 5 bis 50 mm, bevorzugt 8 bis 20 mm, auf.

Der Fließmittelanteil (Wirkstoffgehalt) in der Betonmischung beträgt vorzugsweise 0,3 bis 1,2 M.-%, bevorzugt 0,6 bis 0,9 M.-% bezogen auf die Trockenmasse der Bindemittelkomponente.

Vorzugsweise handelt es sich bei dem Fließmittel um einen Polycarboxylatether.

Und der w/b-Wert (=Wasser/Bindemittel-Wert) der Betonmischung beträgt vorzugsweise 0,19 bis 0,25, bevorzugt 0,20 bis 0,23.

Dabei wird in an sich bekannter Weise unter anderem der Feuchtegehalt der verwendeten Rohstoffe und auch der Wassergehalt der Zusatzmittel, insbesondere des Fließmittels, in den Wassergehalt der Betonmischung mit eingerechnet.

Und der Anteil an Bindemittel entspricht dem Anteil an Bindemittelkomponente.

Dabei handelt es sich bei dem Hüttensand vorzugsweise um einen Feinsthüttensand mit einem d₉₅ Wert von 6 bis 30 µm, bevorzugt 9 bis 28 µm bestimmt mittels Laserlichtbeugung gemäß ISO 13320:2020-01.

Und der Portlandzementklinker weist vorzugsweise einen Blainewert von 4500 bis 6000 cm²/g, bevorzugt 4800 bis 5500 cm²/g, auf.

Des Weiteren beträgt der Anteil an Hüttensand (Trockenmasse) vorzugsweise 20 bis 60 M.-%, bevorzugt 30 bis 50 M.-%, bezogen auf die gesamte Trockenmasse der Bindemittelkomponente.

Und der Anteil an Portlandzementklinker und Erstarrungsregler (Trockenmasse) zusammen beträgt vorzugsweise 40 bis 80 M.-%, bevorzugt 50 bis 70 M.-%, bezogen auf die gesamte Trockenmasse der Bindemittelkomponente.

Der Anteil an Erstarrungsregler beträgt vorzugsweise 1,5 bis 5 M.-%, vorzugsweise 2 bis 3,5 M.-%, bezogen auf die gesamte Trockenmasse der Bindemittelkomponente.

Vorzugsweise wird für die Herstellung der Betonmischung ein Portlandkompositzement CEM II oder ein Portlandhüttenzement CEM II oder ein Hochofenzement CEM III gemäß DIN EN 197-1:2011-11, bevorzugt ein CEM III/A, verwendet.

Normgemäß können die oben genannten Zemente bekanntermaßen bis zu 5 M.-% Nebenbestandteile aufweisen. Die Nebenbestandteile sind in der Regel inert und werden im Rahmen der Erfindung deshalb nicht zur Bindemittelkomponente dazu gerechnet. Reaktive Nebenbestandteile sind Teil der Bindemittelkomponente.

Vorzugsweise weist die Bindemittelkomponente keinen Silicastaub, bevorzugt keine Puzzolane auf.

Wie bereits erläutert, weisen aus der erfindungsgemäßen Betonmischung hergestellte, erhärtete Betonbauteile hervorragende Festigkeitseigenschaften auf.

Dazu wird die Betonmischung gemäß einer Ausführungsform der Erfindung in an sich bekannter Weise in einem Transportbetonwerk angemischt bzw. hergestellt und die angemischte Transportbetonmischung zur Baustelle transportiert.

Auf der Baustelle erfolgt die Formgebung und das Erhärten zum Transportbetonbauteil.

Gemäß einer weiteren Ausführungsform der Erfindung wird die Betonmischung in an sich bekannter Weise in einem Fertigteilwerk angemischt bzw. hergestellt und dort vor Ort aushärten gelassen. Das erhärtete Fertigbetonbauteil wird dann zum Einsatzort transportiert und dort eingebaut.

Und gemäß einer weiteren Ausführungsform der Erfindung wird die Betonmischung in an sich bekannter Weise mittels einer, insbesondere mobilen, Baustellenanlage auf der Baustelle angemischt bzw. hergestellt. Auf hier erfolgt die Formgebung und das Erhärten zum Baustellenbetonbauteil der Baustelle.

Vorzugsweise weisen die erfindungsgemäßen Betonbauteile eine Biegezugfestigkeit von 12 bis 30 N/mm², bevorzugt 15 bis 25 N/mm², gemäß DIN EN 196-1:2016-11 auf.

Zudem weisen die erfindungsgemäßen Betonbauteile vorzugsweise eine Zylinderdruckfestigkeit von 100 bis 180 N/mm², bevorzugt 120 bis 160 N/mm², gemäß DIN EN 12390-3:2019-10 auf.

### Ausführungsbeispiele:

Im Folgenden wird die Erfindung anhand von Ausführungsbeispielen näher erläutert.

In nachstehender Tabelle 1 sind die verwendeten erfindungsgemäßen Feinstsande mit den zugehörigen Eigenschaften aufgeführt:

**Tabelle 1: Eigenschaften der erfindungsgemäßen Feinstsande, Korngrößen bestimmt gemäß ISO 13320:2020-01**

| | **Hersteller** | **Äquivalentdurchmesser RRSB d' gemäß DIN 66145:1976-04** | **d₁₀ Wert** | **d₁₆ Wert** | **d₅₀ Wert** | **d₈₄ Wert** | **d₉₀ Wert** | **d₉₅ Wert** | **Steigungsmaß n-Wert gemäß DIN 66145:1976-04** |
|---|---|---|---|---|---|---|---|---|---|
| **Schlemmsand (DT) 0-1 mm** | Dyckerhoff Trebur | 359 µm | 148 µm | 179 µm | 298 µm | 469 µm | 555 µm | 681 µm | 2,26 |
| **Schlemmsand (DS) 0-1 mm** | Dyckerhoff Seitz | 362 µm | 143 µm | 172 µm | 292 µm | 493 µm | 599 µm | 722 µm | 2,03 |
| **Wüstensand gesiebt (WSg)** | Exo Terra | 319 µm | 117 µm | 144 µm | 259 µm | 427 µm | 511 µm | 654 µm | 2,00 |

In nachstehender Tabelle 2 sind die weiteren verwendeten, nicht erfindungsgemäßen Sande mit den zugehörigen Eigenschaften aufgeführt:

**Tabelle 2: Eigenschaften der weiteren Sande**

| | **Hersteller** | **Äquivalentdurchmesser RRSB d' gemäß DIN 66145:1976 -04** | **d₁₀ Wert** | **d₁₆ Wert** | **d₅₀ Wert** | **d₈₄ Wert** | **d₉₀ Wert** | **d₉₅ Wert** | **Steigungsmaß n-Wert gemäß DIN66145:1 976-04** |
|---|---|---|---|---|---|---|---|---|---|
| **Sand Siligran S80 0,063-0,25 mm** | Euroquarz | 216 µm | 114 µm | 131 µm | 193 µm | 263 µm | 286 µm | 307 µm | 3,40 |
| **4-Komponenten-Sand (Dyckerhoff Eigenmischung)** | Quarzwerke Frechen | 199 µm | 9 µm | 16 µm | 147 µm | 341 µm | 390 µm | 446 µm | 0,71 |

In nachstehender Tabelle 3 sind die Betonmischungen aufgeführt:

**Tabelle 3: Rezepturen**

| *Betonmischungen* | | *V1* | *A1* | *A2* | *A3* | *V2* | *V3* |
|---|---|---|---|---|---|---|---|
| CEM III/A 52,5 R (Variodur40) | kg/m³ | 900 | | | | | - |
| CEM 152,5 R-SR 3 (na) | kg/m³ | - | - | - | - | - | 720 |
| Silikastaub (Elkem Microsilica) | kg/m³ | - | - | - | - | - | 180 |
| Sand (Euroquarz Siligran S80) 0,063-0,25 mm | kg/m³ | *1.230* | - | - | - | - | 1.230 |
| Wüstensand (Exo Terra) gesiebt (WSg) | kg/m³ | - | - | - | 1.230 | - | - |
| 4-Komponenten-Sandmischung (Quarzwerke Frechen) | kg/m³ | - | - | - | - | 1.230 | - |
| Schlemmsand (Dyckerhoff Trebur) 0-1 mm | kg/m³ | - | 1.230 | - | - | - | - |
| Schlemmsand (Dyckerrhoff Seltz) 0-1 mm | kg/m³ | - | - | 1.230 | - | - | - |
| Mikrostahlfasem (KrampeHarrex12,5 / 0,175) | kg/m³ | 200 | | | | | |
| PCE Fließmittel (Chryso 145 -30%, Sika 2810 - 40%) | kg/m³ | 25 (C) | 18,5 (C) | 18,9 (C) | 16,5 (C) | 21,6 (C) | 18,5 (S) |
| Wasser (inkl. Wasser aus PCE) | kg/m³ | 196 | 180 | 180 | 180 | 194 | 194 |
| Wasser-/Bindemittelwert-Wert W/B | - | 0,22 | 0,21 | 0,21 | 0,21 | 0,22 | 0,22 |
| Ausbreitmaß | mm | 450 | 650 | 565 | 620 | 630 | 485 |

| Festbetoneigenschaften 28 Tage | | | | | | | |
|---|---|---|---|---|---|---|---|
| Druckfestigkeit Prisma | N/mm² | 191 | 204 | 188 | 208 | 210 | 175 |
| Würfeldruckfestigkeit | N/mm² | 157 | 163 | 149 | 160 | 176 | 146 |
| Druckfestigkeit Zylinder | N/mm² | 145 | - | 139 | 152 | 164 | 147 |
| E-Modul | N/mm² | 43.900 | - | 43.133 | 47.262 | 47.808 | 46.534 |
| 4-P-Biegezugfestigkeit Prisma 4×4×16 cm³ | N/mm² | 18,4 | 19,3 | 20,0 | 17,0 | 16,4 | 11,7 |

Es wurden jeweils aus unterschiedlichen Betonmischungen Probekörper hergestellt. Dazu wurden Sand und die Bindemittelkomponente vorgelegt, Wasser und Fließmittel zugegeben und nach der Durchmischung die Stahlfasern vereinzelt über ein grobmaschiges Sieb in die Mischung dosiert.

Die Herstellung und Lagerung der Probekörper vor der Prüfung erfolgte gemäß DIN EN 12390-1:2021-09 und DIN EN 12390-2:2019-10.

Die Prüfung der Probekörper erfolgte gemäß DIN EN 12390-3:2019-10 (Druckfestigkeiten) und DIN EN 196-1:2016-11 (4-Punkt Biegezugfestigkeit).

Aus Tabelle 3 ist zu erkennen, dass die Druckfestigkeiten der beiden aus erfindungsgemäßen Betonmischungen A1 und A2 hergestellten Probekörper auf dem Niveau der nicht erfindungsgemäßen Betonmischungen V1 bis V3 mit herkömmlichen Sand liegen. Die nicht erfindungsgemäßen Betonmischungen, insbesondere die mit Silicastaub hergestellten Probekörper V3, weisen zum Teil deutlich geringere Biegezugfestigkeiten auf.

Als Referenz ist dabei insbesondere die auf dem Markt vertriebene Betonmischung V1 anzusehen, die 1.230 kg/m³ industriellen Feinsand S80 und 900 kg/m³ Normzement Variodur 40 CEM III/A 52,5 R aufweist.

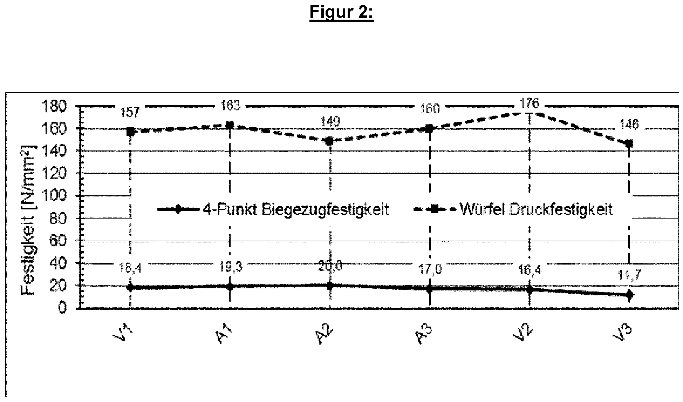

Im Ergebnis zeigen die Betonmischungen mit den beiden Schlemmsanden 0/1mm im Mittel eine sehr hohe Biegezugfestigkeit von 19,7 N/mm², Prismendruckfestigkeit von 196 N/mm² und Druckfestigkeit am 10-er Würfel von 156 (siehe auch Figur 2). Auch weitere Kennwerte wie E-Modul und Zylinderdruckfestigkeit der erfindungsgemäßen Betonmischung A2 liegen auf sehr hohem Niveau und entsprechen der Referenz V1 mit dem industriellen Feinsand S80.

Die Würfel- und Zylinderdruckfestigkeiten wie auch der E-Modul bei der Betonmischung mit gesiebtem Wüstensand A3 sind vergleichsweise hoch, die Biegezugfestigkeit aber etwas geringer.

Die Ergebnisse zeigen, dass die mechanischen Eigenschaften aller erfindungsgemäßen Probekörper auf einem sehr hohen Niveau mit > 140 Druck- und > 17 Biegezugfestigkeit liegen. Das unterstützt die These, dass Hochleistungsbeton mit sehr hochwertigem Bindemittelleim keine besondere Qualität und Abstufung der Gesteinskörnung erfordert und diese hauptsächlich als Füllstoff zu betrachten ist.

Es ist also erfindungsgemäß möglich, nur mit den nicht bzw. schwer verwertbaren und schwer zu verdichtenden Feinstsanden aus der Sand- und Kiesaufbereitung als Komponente der Gesteinskörnung in Verbindung mit einer Bindemittelkomponente mit Portlandzementklinker und feinem Hüttensand Hochleistungsbeton herzustellen. Der Einsatz als ausschließlicher Zuschlagstoff ist dabei als ungünstigste Variante zu betrachten und Kombinationen mit hochwertigeren Sanden können die Ergebnisse nur verbessern.

Vorteilhaft ist auch, dass die Sandkörner des Feinstsandes nicht zuvor zu Granulatkörnern agglomeriert werden, sondern der Feinstsand mit seinen Sandkörnern als solches verwendet wird.

Die erfindungsgemäße Betonmischung zur Herstellung von Hochleistungsbeton kann also einen erheblichen Beitrag zur Ressourcenschonung leisten und der daraus hergestellte Hochleistungsfestbeton kann durch geringere Bauteilabmessungen sogar wesentlich CO₂-effizienter als Normalbeton sein.

Abschließend wird darauf hingewiesen, dass alle genannten, insbesondere beanspruchten, Merkmale der Betonmischung sowie der Verwendungen und der Verfahren für sich genommen und in jeglicher Kombination besonders vorteilhaft und Gegenstand der vorliegenden Erfindung sind. Zudem sind die jeweils angegebenen Ober- und Untergrenzen der einzelnen Bereichsangaben erfindungsgemäß alle miteinander kombinierbar.

## Patentansprüche

1. Betonmischung zur Herstellung von Betonbauteilen, bevorzugt aus ultrahochfestem Beton (UHFB), aufweisend:
a) eine Bindemittelkomponente, die Portlandzementklinker, Hüttensand und zumindest einen Erstarrungsregler in Form einer Calciumsulfatkomponente aufweist,
b) zumindest ein Fließmittel,
c) Vorzugsweise Fasern, bevorzugt Stahlfasern,
d) eine Gesteinskörnungskomponente aufweisend eine Sandkomponente, vorzugsweise in einer Menge (Trockenmasse) an Sandkomponente von 5 bis 60 M.-%, bevorzugt 15 bis 60 M.-%, besonders bevorzugt 35 bis 55 M.-%, bezogen auf die Gesamtmasse der Betonmischung,
e) Anmachwasser,
**dadurch gekennzeichnet, dass**
die Sandkomponente zumindest einen Feinstsand mit einem d₉₅ Wert von 500 bis 800 µm, bevorzugt 620 bis 750 µm, gemäß ISO 13320:2020-01, und einen Äquivalentdurchmesser d' von 300 bis 470 µm, bevorzugt 300 bis 390 µm, besonders bevorzugt 310 bis 370 µm, gemäß ISO 13320:2020-01 und DIN 66145:1976-04, aufweist,
und die Bindemittelkomponente zu mindestens 95 M.-%, besonders bevorzugt zu 100 M.-%, aus Hüttensand, Portlandzementklinker und Erstarrungsregler besteht.

2. Betonmischung nach Anspruch 1,
**dadurch gekennzeichnet, dass**
es sich bei dem Feinstsand um Schlemmsand oder Wüstensand handelt.

3. Betonmischung nach Anspruch 1 oder 2,
**dadurch gekennzeichnet, dass**
a) der Feinstsand einen n-Wert gemäß DIN 66145:1976-04 von 1,5 bis 3,3 bevorzugt 1,9 bis 2,5, besonders bevorzugt 1,9 bis 2,3, aufweist,
und/oder
b) der Feinstsand einen d₉₀ Wert von 450 bis 650 µm, bevorzugt 500 bis 600 µm, gemäß ISO 13320:2020-01, und/oder einen d₅₀ Wert von 200 bis 400 µm, bevorzugt 250 bis 350 µm, gemäß ISO 13320:2020-01, aufweist,
und/oder
c) es sich bei dem Hüttensand um einen Feinsthüttensand mit einem d₉₅ Wert gemäß ISO 13320:2020-01 von 6 bis 30 µm, bevorzugt 9 bis 28 µm, handelt.

4. Betonmischung nach einem der vorhergehenden Ansprüche,
**dadurch gekennzeichnet, dass**
a) der Trockenanteil an Bindemittelkomponente in der Betonmischung 25 bis 50 M.-%, vorzugsweise 30 bis 50 M.-%, bevorzugt 30 bis 40 M.-%, bezogen auf die Gesamtmasse der Betonmischung, beträgt,
und/oder
b) und der Trockenanteil an Sandkomponente in der Betonmischung 5 bis 60 M.-%, bevorzugt 15 bis 60 M.-%, besonders bevorzugt 35 bis 55 M.-%, bezogen auf die Gesamtmasse der Betonmischung, beträgt.

5. Betonmischung nach einem der vorhergehenden Ansprüche,
**dadurch gekennzeichnet, dass**
a) der Anteil an Hüttensand 20 bis 60 M.-%, bevorzugt 30 bis 50 M.-%, bezogen auf die gesamte Trockenmasse der Bindemittelkomponente, beträgt,
und/oder
b) der Anteil an Portlandzementklinker und Erstarrungsregler zusammen genommen 40 bis 80 M.-%, bevorzugt 50 bis 70 M.-%, bezogen auf die gesamte Trockenmasse der Bindemittelkomponente, beträgt.

6. Betonmischung nach einem der vorhergehenden Ansprüche,
**dadurch gekennzeichnet, dass**
die Bindemittelkomponente keinen Silicastaub, vorzugsweise keine puzzolanischen Zusatzstoffe, aufweist.

7. Betonmischung nach einem der vorhergehenden Ansprüche,
**dadurch gekennzeichnet, dass**
a) der Portlandzementklinker einen Blainewert von 4500 bis 6000 cm²/g, bevorzugt 4800 bis 5500 cm²/g, aufweist,
und/oder
b) es sich bei dem Feinstsand um Quarzsand handelt, wobei der Feinstsand vorzugsweise einen SiO₂-Gehalt von > 75 M.-%, bevorzugt > 90 M.-%, besonders bevorzugt > 98 M.-%, bestimmt mittels Röntgendiffraktometrie gemäß DIN EN 13925-1:2003-7, DIN EN 13925-2:2003-7 und DIN EN 13925-3:2005-7 ohne inneren Standard und mit Rietveld-Auswertung, aufweist.

8. Betonmischung nach einem der vorhergehenden Ansprüche,
**dadurch gekennzeichnet, dass**
a) die Sandkomponente zu 20 bis 100 M.-%, bevorzugt zu 40 bis 100 M.-%, besonders bevorzugt zu 50 bis 100 M.-%, bezogen auf die Trockenmasse der Sandkomponente, aus dem zumindest einen Feinstsand besteht,
und/oder
b) die Gesteinskörnungskomponente der Betonmischung zu 80 bis 100 M.-%, bevorzugt zu 90 bis 100 M.-%, bezogen auf die Trockenmasse der Gesteinskörnungskomponente, aus der Sandkomponente besteht.

9. Betonmischung nach einem der vorhergehenden Ansprüche,
**dadurch gekennzeichnet, dass**
a) der Anteil an Fasern, vorzugsweise Stahlfasern, in der Betonmischung vorzugsweise 2 bis 12 M.-%, bevorzugt 6 bis 10 M.-%, bezogen auf die Gesamtmasse der Betonmischung, beträgt,
und/oder
b) die Fasern, vorzugsweise die Stahlfasern, eine Faserlänge von 5 bis 50 mm, bevorzugt 8 bis 20 mm, aufweisen.

10. Betonmischung nach einem der vorhergehenden Ansprüche,
**dadurch gekennzeichnet, dass**
die Betonmischung einen w/b-Wert von 0,19 bis 0,25, vorzugsweise 0,20 bis 0,23, aufweist.

11. Verwendung von Feinstsand mit einem d₉₅ Wert von 500 bis 800 µm, bevorzugt 620 bis 750 µm, gemäß ISO 13320:2020-01 und einem Äquivalentdurchmesser d' von 300 bis 470 µm, vorzugsweise 300 bis 390 µm, besonders bevorzugt 310 bis 370 µm, gemäß ISO 13320:2020-01 und DIN 66145:1976-04, zur Herstellung einer Betonmischung gemäß einem der vorhergehenden Ansprüche,
wobei vorzugsweise Feinstsand verwendet wird, der feucht ist und/oder nicht feuergetrocknet ist.

12. Verfahren zur Herstellung einer Betonmischung nach einem der Ansprüche 1 bis 10,
**dadurch gekennzeichnet, dass**
die Bestandteile der Betonmischung, vorzugsweise in einem Transportbetonwerk oder in einer mobilen Baustellenmischanlage auf einer Baustelle oder in einem Fertigteilwerk, miteinander gemischt werden.

13. Betonbauteil,
**dadurch gekennzeichnet, dass**
das Betonbauteil hergestellt ist aus einer Betonmischung nach einem der Ansprüche 1 bis 10, wobei vorzugsweise
a) das Betonbauteil eine 4-Punkt Biegezugfestigkeit von 12 bis 30 N/mm², bevorzugt 15 bis 25 N/mm², gemäß DIN EN 196-1:2016-11 aufweist,
und/oder
b) das Betonbauteil eine Zylinderdruckfestigkeit von 100 bis 180 N/mm², bevorzugt 120 bis 160 N/mm², gemäß DIN EN 12390-3:2019-10 aufweist.

14. Verwendung einer, vorzugsweise in einem Transportbetonwerk oder auf einer Baustelle oder einem Fertigteilwerk hergestellten, Betonmischung nach einem der Ansprüche 1 bis 10 zur Herstellung eines Betonbauteils, bevorzugt aus ultrahochfestem Beton (UHFB), vorzugsweise zur Herstellung eines Betonbauteils gemäß Anspruch 13.

15. Verfahren zur Herstellung eines Betonbauteils unter Verwendung einer Betonmischung nach einem der Ansprüche 1 bis 10, vorzugsweise zur Herstellung eines Betonbauteils gemäß Anspruch 13,
mit folgenden Verfahrensschritten
a) Herstellung der Betonmischung,
b) Formgebung der Betonmischung,
c) Erhärten lassen der Betonmischung zu dem Betonbauteil,
wobei vorzugsweise
a) die Herstellung der Betonmischung in einem Transportbetonwerk erfolgt und die Formgebung und das Erhärten lassen der Betonmischung auf der Baustelle erfolgt,
oder
b) die Herstellung der Betonmischung in einer mobilen Baustellenmischanlage auf einer Baustelle erfolgt und die Formgebung und das Erhärten lassen auch auf der Baustelle erfolgt,
oder
c) die Herstellung, die Formgebung und das Erhärten lassen der Betonmischung in einem Fertigteilwerk erfolgt.

## Claims

1. Concrete mixture for the production of concrete construction elements, preferably made of ultra-high performance concrete (UHPC), comprising:
a) a binder component comprising Portland cement clinker, granulated blast furnace slag and at least one setting regulator in the form of a calcium sulphate component,
b) at least one superplasticizer,
c) Preferably fibers, particularly preferably steel fibers,
d) an aggregate component comprising a sand component, preferably in an amount (dry mass) of sand component of 5 to 60 ma.%, preferably 15 to 60 ma.%, particularly preferably 35 to 55 ma.%, based on the total mass of the concrete mixture,
e) Mixing water,
**characterized in that**
the sand component comprises at least one finest sand with a d₉₅ value of 500 to 800 µm, preferably 620 to 750 µm, according to ISO 13320:2020-01, and an equivalent diameter d' of 300 to 470 µm, preferably 300 to 390 µm, particularly preferably 310 to 370 µm, according to ISO 13320:2020-01 and DIN 66145:1976-04,
and the binder component consists of at least 95 ma.%, particularly preferably of 100 ma.%, of granulated blast furnace slag, Portland cement clinker and setting regulator.

2. Concrete mixture according to claim 1,
**characterized in that**
the finest sand is alluvial sand or desert sand.

3. Concrete mixture according to claim 1 or 2,
**characterized in that**
a) the finest sand comprises an n-value according to DIN 66145:1976-04 of 1.5 to 3.3, preferably 1.9 to 2.5, particularly preferably 1.9 to 2.3,
and/or
b) the finest sand comprises a d₉₀ value of 450 to 650 µm, preferably 500 to 600 µm, according to ISO 13320:2020-01, and/or a d₅₀ value of 200 to 400 µm, preferably 250 to 350 µm, according to ISO 13320:2020-01,
and/or
c) the granulated blast furnace slag is finest granulated blast furnace slag with a d₉₅ value according to ISO 13320:2020-01 of 6 to 30 µm, preferably 9 to 28 µm.

4. Concrete mixture according to any of the preceding claims,
**characterized in that**
a) the dry content of binder component in the concrete mixture is 25 to 50 ma.%, preferably 30 to 50 ma.%, preferably 30 to 40 ma.%, based on the total mass of the concrete mixture,
and/or
b) and the dry content of sand component in the concrete mixture is 5 to 60 ma.%, preferably 15 to 60 ma.%, particularly preferably 35 to 55 ma.%, based on the total mass of the concrete mixture.

5. Concrete mixture according to any of the preceding claims,
**characterized in that**
a) the amount of granulated blast furnace slag is 20 to 60 ma.%, preferably 30 to 50 ma.%, based on the total dry mass of the binder component,
and/or
b) the amount of Portland cement clinker and setting regulator taken together is 40 to 80 ma.%, preferably 50 to 70 ma.%, based on the total dry mass of the binder component.

6. Concrete mixture according to any of the preceding claims,
**characterized in that**
the binder component does not contain any silica fume, preferably no pozzolanic additives.

7. Concrete mixture according to any of the preceding claims,
**characterized in that**
a) the Portland cement clinker has a Blaine value of 4500 to 6000 cm²/g, preferably 4800 to 5500 cm²/g,
and/or
b) the finest sand is quartz sand, the finest sand preferably comprising an SiO₂ content of > 75 ma.%, preferably > 90 ma.%, particularly preferably > 98 ma.%, determined by X-ray diffraction according to DIN EN 13925-1 :2003-7, DIN EN 13925-2:2003-7 and DIN EN 13925-3:2005-7 without internal standard and with Rietveld evaluation.

8. Concrete mixture according to any of the preceding claims,
**characterized in that**
a) the sand component consists of 20 to 100 ma.%, preferably of 40 to 100 ma.%, particularly preferably of 50 to 100 ma.%, based on the dry mass of the sand component, of the at least one finest sand,
and/or
b) the aggregate component of the concrete mixture consists of 80 to 100 ma.%, preferably of 90 to 100 ma.%, based on the dry mass of the aggregate component, of the sand component.

9. Concrete mixture according to any of the preceding claims,
**characterized in that**
a) the amount of fibers, preferably steel fibers, in the concrete mixture is preferably 2 to 12 ma.%, particularly preferably 6 to 10 ma.%, based on the total mass of the concrete mixture,
and/or
b) the fibers, preferably the steel fibers, comprise a fiber length of 5 to 50 mm, preferably 8 to 20 mm.

10. Concrete mixture according to any of the preceding claims,
**characterized in that**
the concrete mixture has a w/b value of 0.19 to 0.25, preferably 0.20 to 0.23.

11. Use of finest sand with a d₉₅ value of 500 to 800 µm, preferably 620 to 750 µm, according to ISO 13320:2020-01 and an equivalent diameter d' of 300 to 470 µm, preferably 300 to 390 µm, particularly preferably 310 to 370 µm, according to ISO 13320:2020-01 and DIN 66145:1976-04, for producing a concrete mixture according to any of the preceding claims,
wherein preferably a finest sand is used that is moist and/or not fire-dried.

12. Process for producing a concrete mixture according to any one of claims 1 to 10,
**characterized in that**
the constituents of the concrete mixture are mixed together, preferably in a ready-mixed concrete plant or in a mobile construction site mixing unit on a construction site or in a precast part plant.

13. Concrete construction element,
**characterized in that**
the concrete construction element is made from a concrete mixture according to any one of claims 1 to 10, wherein preferably
a) the concrete construction element comprises a 4-point bending tensile strength of 12 to 30 N/mm², preferably 15 to 25 N/mm², in accordance with DIN EN 196-1:2016-11, and/or
b) the concrete construction element comprises a cylindrical compressive strength of 100 to 180 N/mm², preferably 120 to 160 N/mm², in accordance with DIN EN 12390-3:2019-10.

14. Use of a concrete mixture, preferably produced in a ready-mixed concrete plant or on a construction site or in a precast part plant, according to one of claims 1 to 10 for the production of a concrete construction element, preferably made of ultra-high performance concrete (UHPC), preferably for the production of a concrete construction element according to claim 13.

15. A method of producing a concrete construction element using a concrete mixture according to any one of claims 1 to 10, preferably for the production of a concrete construction element according to claim 13,
with the following process steps
a) Production of the concrete mixture,
b) Shaping the concrete mixture,
c) Allowing the concrete mixture to harden to form the concrete construction element,
whereby preferably
a) the concrete mixture is produced in a ready-mix concrete plant and the shaping and hardening of the concrete mixture takes place on the construction site,
or
b) the concrete mixture is produced in a mobile construction site mixing unit on a construction site and the shaping and hardening also takes place on the construction site,
or
c) the production, shaping and hardening of the concrete mixture takes place in a precast part plant.

## Revendications

1. Mélange de béton pour la fabrication d'éléments de construction en béton, de préférence en béton à ultra-haute performances (BUHP), comprenant:
a) un composant de liant qui comprend du clinker de ciment Portland, du laitier granulé de haut-fourneau et au moins un régulateur de prise sous la forme d'un composant de sulfate de calcium,
b) au moins un plastifiant,
c) De préférence des fibres, de manière particulièrement préférée des fibres d'acier,
d) un composant de granulats comprenant un composant de sable, de préférence en une quantité (matière sèche) de composant de sable de 5 à 60 % en masse, de préférence de 15 à 60 % en masse, de manière particulièrement préférée de 35 à 55 % en masse, par rapport à la masse totale du mélange de béton,
e) Eau de gâchage,
**caractérisé en ce que**
le composant de sable comprend au moins un sable ultrafin ayant une valeur d₉₅ de 500 à 800 µm, de préférence de 620 à 750 µm, selon ISO 13320:2020-01, et un diamètre équivalent d' de 300 à 470 µm, de préférence de 300 à 390 µm, de manière particulièrement préférée de 310 à 370 µm, selon ISO 13320:2020-01 et DIN 66145:1976-04,
et le composant de liant est constitué d'au moins 95 % en masse, de manière particulièrement préférée de 100 % en masse, de laitier granulé de haut-fourneau, de clinker de ciment Portland et de régulateur de prise.

2. Mélange de béton selon la revendication 1,
**caractérisé en ce que**
le sable ultrafin est du sable alluvionnaire ou du sable du désert.

3. Mélange de béton selon la revendication 1 ou 2,
**caractérisé en ce que**
a) le sable ultrafin comprend une valeur n selon DIN 66145:1976-04 de 1,5 à 3,3, de préférence de 1,9 à 2,5, de manière particulièrement préférée de 1,9 à 2,3,
et/ou
b) le sable ultrafin comprend une valeur d₉₀ de 450 à 650 µm, de préférence de 500 à 600 µm, selon ISO 13320:2020-01, et/ou une valeur d₅₀ de 200 à 400 µm, de préférence de 250 à 350 µm, selon ISO 13320:2020-01,
et/ou
c) le laitier granulé de haut-fourneau est un laitier granulé de haut-fourneau ultrafin ayant une valeur d₉₅ selon ISO 13320:2020-01 de 6 à 30 µm, de préférence de 9 à 28 µm.

4. Mélange de béton selon l'une quelconque des revendications précédentes,
**caractérisé en ce que**
a) la proportion sèche de composant liant dans le mélange de béton est de 25 à 50 % en masse, de préférence de 30 à 50 % en masse, de préférence de 30 à 40 % en masse, par rapport à la masse totale du mélange de béton,
et/ou
b) et la proportion sèche de composant de sable dans le mélange de béton est de 5 à 60 % en masse, de préférence de 15 à 60 % en masse, de manière particulièrement préférée de 35 à 55 % en masse, par rapport à la masse totale du mélange de béton.

5. Mélange de béton selon l'une quelconque des revendications précédentes,
**caractérisé en ce que**
a) la proportion de laitier granulé de haut-fourneau est de 20 à 60 % en masse, de préférence de 30 à 50 % en masse, par rapport à la masse sèche totale du composant de liant, et/ou
b) la proportion de clinker de ciment Portland et de régulateur de prise , pris ensemble, est de 40 à 80 % en masse, de préférence de 50 à 70 % en masse, par rapport à la masse sèche totale du composant liant.

6. Mélange de béton selon l'une quelconque des revendications précédentes,
**caractérisé en ce que**
le composant de liant ne comprend pas de fumée de silice, de préférence pas d'additifs pouzzolaniques.

7. Mélange de béton selon l'une quelconque des revendications précédentes,
**caractérisé en ce que**
a) le clinker de ciment Portland comprend une valeur Blaine de 4500 à 6000 cm²/g, de préférence de 4800 à 5500 cm²/g,
et/ou
b) il s'agit pour le sable ultrafin de sable de quartz, le sable ultrafin comprenant de préférence une teneur en SiO₂ de > 75 % en masse, de préférence de > 90 % en masse, de manière particulièrement préférée de > 98 % en masse, déterminée par diffractométrie aux rayons X selon DIN EN 13925-1 :2003-7, DIN EN 13925-2:2003-7 et DIN EN 13925-3:2005-7 sans standard interne et avec évaluation Rietveld.

8. Mélange de béton selon l'une quelconque des revendications précédentes,
**caractérisé en ce que**
a) le composant de sable est constitué à 20 à 100 % en masse, de préférence à 40 à 100 % en masse, de manière particulièrement préférée à 50 à 100 % en masse, par rapport à la masse sèche du composant sable, du au moins un sable ultrafin,
et/ou
b) le composant de granulats du mélange de béton est constitué à 80 à 100 % en masse, de préférence à 90 à 100 % en masse, par rapport à la masse sèche du composant de granulats, du composant de sable.

9. Mélange de béton selon l'une quelconque des revendications précédentes,
**caractérisé en ce que**
a) la proportion de fibres, de préférence de fibres d'acier, dans le mélange de béton est de préférence de 2 à 12 % en masse, de préférence de 6 à 10 % en masse, par rapport à la masse totale du mélange de béton,
et/ou
b) les fibres, de préférence les fibres d'acier, comprend une longueur de fibre de 5 à 50 mm, de préférence de 8 à 20 mm.

10. Mélange de béton selon l'une quelconque des revendications précédentes,
**caractérisé en ce que**
le mélange de béton comprend un rapport e/l de 0,19 à 0,25, de préférence de 0,20 à 0,23.

11. Utilisation de sable ultrafin ayant une valeur d₉₅ de 500 à 800 µm, de préférence de 620 à 750 µm, selon la norme ISO 13320:2020-01 et un diamètre équivalent d' de 300 à 470 µm, de préférence de 300 à 390 µm, de manière particulièrement préférée de 310 à 370 µm, selon la norme ISO 13320:2020-01 et la norme DIN 66145:1976-04, pour la fabrication d'un mélange de béton selon l'une des revendications précédentes,
en utilisant de préférence du sable ultrafin qui est humide et/ou qui n'est pas séché au feu.

12. Procédé de fabrication d'un mélange de béton selon l'une quelconque des revendications 1 à 10,
**caractérisé en ce que**
les composants du mélange de béton sont mélangés entre eux, de préférence dans une usine de béton transporté ou dans une unité de mélange mobile de chantier sur un chantier ou dans une usine de préfabrication.

13. Élément de construction en béton,
**caractérisé en ce que**
l'élément de construction en béton est fabriqué à partir d'un mélange de béton selon l'une des revendications 1 à 10, où, de préférence
a) l'élément de construction en béton comprend une résistance à la traction et à la flexion en 4 points de 12 à 30 N/mm², de préférence de 15 à 25 N/mm², selon DIN EN 196-1:2016-11,
et/ou
b) l'élément de construction en béton comprend une résistance à la compression cylindrique de 100 à 180 N/mm², de préférence de 120 à 160 N/mm², selon la norme DIN EN 12390-3:2019-10.

14. Utilisation d'un mélange de béton, de préférence fabriqué dans une usine de béton transporté ou sur un chantier ou sur une usine de préfabrication, selon l'une quelconque des revendications 1 à 10 pour la fabrication d'un élément de construction en béton, de préférence en béton à ultra-haute performances (BUHP), de préférence pour la fabrication d'un élément de construction en béton selon la revendication 13.

15. Procédé de fabrication d'un élément de construction en béton en utilisant un mélange de béton selon l'une quelconque des revendications 1 à 10, de préférence procédé de fabrication d'un élément de construction en béton selon la revendication 13,
avec les étapes de procédure suivantes
a) Fabrication du mélange de béton,
b) Mise en forme du mélange de béton,
c) Laisser durcir le mélange de béton pour obtenir l'élément de construction en béton,
où, de préférence
a) la fabrication du mélange de béton a lieu dans une usine de béton transporté et la mise en forme et le durcissement du mélange de béton ont lieu sur le chantier,
ou
b) la fabrication du mélange de béton a lieu dans une unité de mélange mobile de chantier sur un chantier et la mise en forme et le durcissement ont lieu également sur le chantier,
ou
c) la fabrication, la mise en forme et le durcissement du mélange de béton ont lieu dans une usine de préfabrication.
